# EUROPÄISCHE PATENTSCHRIFT

(11) **EP 3 567 269 B1**
(45) Veröffentlichungstag und Bekanntmachung des Hinweises auf die Patenterteilung: **12.07.2023**
(21) Anmeldenummer: 19173644.6
(22) Anmeldetag: 09.05.2019
(51) Int. Cl.: F16D 65/12, F16D 65/02

(54) **VERFAHREN ZUM BESCHICHTEN VON TEILEN VON FAHRZEUGBREMSEN, VERFAHREN ZUR HERSTELLUNG EINER BREMSSCHEIBE SOWIE BREMSSCHEIBEN**
METHOD FOR COATING PARTS OF VEHICLE BRAKES, BRAKE DISCS AND METHOD FOR PRODUCING A BRAKE DISC
PROCÉDÉ DE REVÊTEMENT DES PARTIES DE FREINS DE VÉHICULE, PROCÉDÉ DE FABRICATION D'UN DISQUE DE FREIN AINSI QUE DISQUES DE FREIN

(30) Priorität: 09.05.2018 DE 102018003799; 29.05.2018 DE 102018004270
(43) Veröffentlichungstag der Anmeldung: 13.11.2019
(73) Patentinhaber: Zermet Zerspanungstechnik GmbH & Co. KG, 77933 Lahr (DE)
(72) Erfinder: Styrnol, Andreas, 77933 Lahr (DE)
(74) Vertreter: Hentrich Patent- & Rechtsanwaltspartnerschaft mbB

(56) Entgegenhaltungen:
- WO-A1-2015/179420
- DE-A1-102008 053 637
- JP-B2- 3 063 201
- US-A1- 2005 087 406

## Beschreibung

Es sind Verfahren zum teilweisen oder vollständigen Beschichten von der Korrosion oder dem Verschleiß unterliegenden Teilen von Bremsen in Fahrzeugen oder anderen Maschinen mit Reibbremsen bekannt. Zudem kommen Anlagenbremsen in Betracht, beispielsweise Bremsen von Windkraftanlagen, von Kränen, von verfahrenden Portalen, Industriebremsen etc..

Die Erfindung betrifft ein Verfahren zur Herstellung einer Bremsscheibe sowie eine Bremsscheibe.

In der WO 2015/179 420 A1, in der US 2005/087/406 A1, in der JP 3 063 201 B2 und in der DE 10 2008 053 637 A1 sind eine beschichtete Bremsscheibe und ein Verfahren zur Herstellung einer solchen angegeben, bei denen ein PVD-Verfahren zur Beschichtung Einsatz findet.

Der Erfindung liegt deshalb die Aufgabe zugrunde, ein Verfahren zu finden, mit dem insbesondere Bremsscheiben verschleißarm und korrosionsgeschützt hergestellt werden können. Zusätzlich ist es Aufgabe der Erfindung, eine entsprechende Bremsscheiben bereitzustellen.

Die Aufgabe wird durch ein Verfahren nach Anspruch 1 und durch eine Bremsscheibe nach Anspruch 5 gelöst. Bevorzugte Ausgestaltungen sind in den abhängigen Ansprüchen angegeben.

Bei der erfindungsgemäßen Lösung entsteht sehr wenig Abrieb beim Bremsen. Vergleichende Tests haben ergeben, dass bei den erfindungsgemäßen Bremsscheiben kein gewichtsmäßig erfassbarer Abrieb durch das Testprogramm konstatiert wurde, während bei den herkömmlichen Bremsen 80g Gewichtsverlust konstatiert wurden. Bei den Bremsklötzen ist der Abrieb um ca. 2/3 reduziert. Gerade unter dem aktuellen Politikum der zu hohen Belastung der Luft durch Feinstäube erlangt die Erfindung ihre Bedeutung. Die mechanisch bearbeiteten Flächen von Bremsscheiben werden durch Nassstrahlen, durch Trockenstrahlen oder mit Ultraschall porentief gereinigt. Vorzugsweise werden die mechanisch bearbeiteten Flächen von Bremsscheiben durch Nassstrahlen, durch Trockenstrahlen und mit Ultraschall porentief, metallisch blank gereinigt.

Die PVD-Beschichtung bietet dann zudem den Vorzug einer dichten Beschichtung, auch bei Lunkern im Trägermaterial. Das bedeutet auch einen guten Korrosionsschutz. Da die beschichteten Bremsscheiben nach der Erfindung wesentlich weniger Verschleiß haben, können Sie geringer dimensioniert werden, was eine Gewichtsreduzierung der nicht oder kaum gefederten Massen bedeutet.

Gemäß der Erfindung erfolgt die Beschichtung mit Hilfe des PVD-ARC-Verfahrens. Ein positiver Nebeneffekt entsteht dadurch, dass sich beim PVD-ARC-Verfahren auf der beschichteten Oberfläche kleine Mikrospritzer auf der Oberfläche absetzen. Diese kleinen Mikrospritzer erleichtern, wenn sie neu sind, das Einbremsen, weil sie die Bremsbeläge geringfügig abtragen. Bei den seltener benutzten Reibbremsen von Elektro-Fahrzeugen, die neben der Reibbremse eine Dynamo-Bremse haben, kommt der Verwendung von mit einer Korrosionsschutzschicht versehenen Bremsscheiben eine höhere Bedeutung zu. Die Reibbremsen der Elektro-Fahrzeuge werden seltener benutzt, da die gesamte Entschleunigungsarbeit oft von der Dynamo-Bremse alleine verrichtet wird. Durch die längeren Zeiträume zwischen den Betätigungszeiten der Reibbremsen besteht die Möglichkeit, dass nicht mit einer Korrosionsschutzschicht überzogene Bremsscheiben der Reibbremsen korrodieren und erst wieder eingebremst werden müssen. Dann, wenn die Dynamo-Bremse nicht für die notwendige Entschleunigung sorgt, müssen die korrosionsgeschützten Bremsscheiben nicht wieder eingebremst werden. Die Notwendigkeit des Einbremsens ist durch die Beschichtung und den Korrosionsschutz aufgrund der Beschichtung nicht mehr notwendig.

Wenn Reibbremse und Antriebsmotor nahe beieinander auf einer Antriebswelle sitzen, kann nach der Erfindung wegen des geringen Anfalls von elektrisch leitendem Abrieb eine Verschmutzung des Elektro-Motors reduziert werden.

Eine Weiterbildung der Erfindung wird darin gesehen, dass der Schichtauftrag in mehreren Lagen wechselnder Zusammensetzung erfolgt. Das Material der Beschichtung kann dabei den Bedürfnissen des Reibprozesses angepasst werden. Es können bis zu sechzig Lagen der Beschichtung vorgesehen sein. Vorzugsweise werden maximal zwanzig Lagen der Beschichtung eingesetzt. Eine weitere vorteilhafte Ausgestaltung der Erfindung ist darin zu erblicken, Schichten großer Härte und Schichten geringerer Härte beim Beschichten im Wechsel aufeinander folgen zu lassen, um so die gewünschte Zähigkeit des Belags einzustellen und den Bedürfnissen des Reibungsprozesses anzupassen.

Insbesondere zur Einstellung des gewünschten Härtegrades des Reibbelages wird nach einer Weiterbildung der Erfindung empfohlen, einzelne Lagen aus Titan-Aluminium-Stickstoff (TiAIN), d.h. Lagen mit einem größeren Titananteil als der Aluminiumanteil, auf Lagen von Aluminium-Titan-Stickstoff (AlTiN), d.h. Lagen mit einem mit Aluminiumanteil als der Titananteil, folgen zu lassen. Vorzugsweise sind die einzelnen Lagen abwechselnd, mithin alternierend, aufeinander aufgebracht. Insbesondere bilden dabei die TiAIN-Lage eine Lage geringerer Härte und die AlTiN-Lage eine Lage großer Härte.

Alle so gebildeten einzelnen Lagen sind vorzugsweise homogen, mithin gradientenfrei, hinsichtlich ihrer Titan-Konzentration aufgebaut. Zur Herstellung der einzelnen Lagen findet bevorzugt ebenfalls ein Lichtbogenverdampfungsverfahren (PVD-ARC-Verfahren) Einsatz. Dabei werden beispielsweise eine erste Titan-Aluminium-Kathode (TiAl) mit einem größeren Titananteil gegenüber dem Aluminiumanteil (bspw. zwischen 65% und 85% Titan und dazu komplementär zwischen 15% und 35% Aluminium) und eine zweite Titan-Aluminium-Kathode mit einem größeren Aluminiumanteil gegenüber dem Titananteil (bspw. zwischen 50% und 67% Aluminium und dazu komplementär zwischen 33% und 50% Titan) eingesetzt. Es besteht auch die Möglichkeit, eine erste Titan-Kathode und eine zweite Kathode mit einem großen Aluminiumanteil zu verwenden, wobei jeweils geeignete Verdampfungsströme angewendet werden, um lagenweise die gewünschte Konzentration zu erzielen.

Zur Beschleunigung des Beschichtungsprozesses hat es sich als vorteilhaft herausgestellt, wenn der Lichtbogen an beiden Kathoden (sowohl an der einen größeren Titananteil liefernden Kathode als auch an der einen größeren Aluminiumanteil liefernden Kathode) aufrechterhalten wird und die Titan- oder Aluminium-Konzentration mithilfe der jeweils eingesetzten Verdampfungsströme eingestellt wird. Dabei ist es von Vorteil, wenn die stärker zu verdampfende Kathode mit einem Verdampfungsstrom von zwischen 170 Ampère (A) und 190 A, vorzugsweise mit ungefähr 180 A betrieben wird. Dabei ist es ferner von Vorteil, wenn die schwächer zu verdampfende Kathode mit einem Verdampfungsstrom von zwischen 110 Ampère (A) und 130 A, vorzugsweise mit ungefähr 120 A betrieben wird.

Um einen robusten Schichtauftrag mit alternierenden TiAIN- und AlTiN-Schichten zu erzielen, hat es sich als vorteilhaft herausgestellt, wenn die Dauer für den Auftrag einer Lage zwischen 5 Minuten (Min.) und 10 Min., vorzugsweise ungefähr 8 Min. andauert.

Ein prozesssicheres, weil verschmutzungsarmes, Beschichten im PVD-Beschichtungsverfahren erfolgt "in situ" bei Drücken im Bereich von zwischen 9,0 . 10⁻³ Millibar (mbar) bis 4,0 · 10⁻² mbar. Ferner liegen vorzugsweise Temperaturen von zwischen 400 Grad Celsius und 500 Grad Celsius, vorzugsweise ungefähr 450 Grad Celsius, beim Beschichten vor.

In bevorzugter Weiterbildung der Erfindung wird vorgeschlagen, dass die Gesamtschichtdicke weniger als zwanzig Mikrometer (µm) beträgt. Ein in der Praxis bewährter Bereich für die Dicke der Beschichtung liegt zwischen 5 µm und 10µm. Die Wirtschaftlichkeit setzt der Schichtdicke Obergrenzen, die in den genannten Bereichen zum Ausdruck kommen.

Zur Stabilisierung des erfindungsgemäßen Erfolges wird nach einem die Erfindung ergänzenden Merkmal vorgeschlagen, dass dem PVD-Beschichtungsverfahren ein Plasma-Nitrierverfahren vorgeschaltet ist.

Die PVD-beschichteten Teile der Fahrzeugbremsen sind aufwendiger als die nicht beschichteten Teile und deshalb teurer. Um diese höhere Wertigkeit zum Ausdruck zu bringen, wird vorgeschlagen, dass die Bremsscheiben allseitig beschichtet werden. Dadurch wird auch vermieden, dass die Bremsscheiben auf der Scheibenträgerplatte festrosten.

Unter den Metallen findet erfindungsgemäß Grauguss als Trägermaterial für die PVD-Beschichtung Anwendung, die, nach einem der vorstehend gekennzeichneten Verfahren, beschichtet sind. Vorzugsweise umfasst die beschichtete Scheibe, mithin die beschichtete Reibscheibe ein Trägermaterial aus Grauguss, vorzugsweise einer Graugusslegierung ausgewählt aus GG20, GG25, GG30, GG35 und GG40.

In weiterer Ausgestaltung der Erfindung ist die komplette Bremsscheibe PVD-beschichtet. Vorzugsweise ist die komplette Reibscheibe PVD-beschichtet.

Ein - nicht von der Erfindung erfasstes - Verfahren zur Herstellung einer Bremsscheibe mit einem Topf und einer Bremsflächen aufweisenden Scheibe umfasst die folgenden Schritte:
- Bereitstellen einer unbeschichteten Scheibe,
- Verbinden des Topfes mit der Scheibe mittels mit Graphitstaub beschichteter Verbindungsmittel; und
- Beschichten der Scheibe der Bremsscheibe, ggfs. zusammen mit dem Topf, mittels des PVD-Verfahrens.

Dieses Verfahren weist den Vorteil auf, dass die Verbindungsmittel, beispielsweise in Form von Stiften oder Nieten, mit Graphitstaub zur Förderung der Beweglichkeit beschichtet sind. Da das PVD-Beschichtungsverfahren unter Vakuumbedingungen erfolgt, sollte kein Hochtemperaturfett zur Förderung der Beweglichkeit eingesetzt werden, welches die Atmosphäre des Vakuums aufgrund eines Ausgasens verschmutzt. Die Verschmutzung der Atmosphäre des Vakuums wird durch die Verwendung des Graphitstaubs vermieden. Es hat sich dabei als vorteilhaft erwiesen, wenn die Scheibe aus Grauguss gebildet ist, und wenn der Topf aus einer Legierung gebildet ist, die bei Temperaturen von bis zu 500 Grad Celsius keinen Gefügeveränderungen unterliegt, womit Einbußen bei der Zugfestigkeit infolge der hohen Temperaturen vermieden werden. Es besteht aber zudem die vorteilhafte Möglichkeit, dass der Topf aus einer Aluminiumlegierung gebildet ist.

Das Verfahren zur Herstellung einer Bremsscheibe mit einem Topf, der Aluminium oder eine Aluminiumlegierung umfasst, mit einer Bremsflächen aufweisenden Scheibe, die Grauguss umfasst, sowie mit Verbindungselementen zur Verbindung des Topfes und der Scheibe, umfasst die folgenden Schritte:
- Beschichten von Flächen der Scheibe mit einer Beschichtung, wodurch die Bremsflächen ausgebildet werden;
- zeitlich dem Beschichten nachfolgend, Einsetzen von jeweils einem der Verbindungselemente in jeweils eine von in der Scheibe ausgebildeten Aufnahmen, derart, dass die Verbindungselemente aus den Aufnahmen herausragen; und
- zeitlich dem Einsetzen nachfolgend, Urformen, insbesondere Gießen des Topfes, derart, dass die Verbindungselemente in das Material des Topfes eingebettet oder eingegossen werden.

Ein weiteres Verfahren zur Herstellung einer Bremsscheibe mit einem Topf, der Aluminium oder eine Aluminiumlegierung umfasst, mit einer Bremsflächen aufweisenden Scheibe, die Grauguss umfasst, sowie mit Verbindungselementen zur Verbindung des Topfes und der Scheibe, umfasst die folgenden Schritte:
- Beschichten von Flächen der Scheibe mit einer Beschichtung, wodurch die Bremsflächen ausgebildet werden;
- zeitlich dem Beschichten nachfolgend, Vernieten des Topfes mit der beschichteten Scheibe mittels Nieten.

Diese Verfahren zur Herstellung der Bremsscheibe setzen dabei das vorangehend bereits erläuterte PVD-Beschichtungsverfahren zur Beschichtung der eigentlichen, den Reibbelag bereitstellenden Scheibe ein, weshalb die Reihenfolge der einzelnen Schritte als erfindungswesentlich vorgegeben ist. Wie vorstehend bereits erläutert wurde, liegen beim Beschichtungsvorgang vorzugsweise Temperaturen von zwischen 400 Grad Celsius und 500 Grad Celsius, vorzugsweise ungefähr 450 Grad Celsius, vor. Bei diesen Temperaturen verliert ein aus einer Aluminiumlegierung gebildeter Topf der Bremsscheibe an Festigkeit. Es kommt nämlich bei Temperaturen ab 350 Grad Celsius zu Gefügeveränderungen der Aluminiumlegierung des Topfes, womit dieser seine gewünschte Zugfestigkeit verlieren kann. Aus diesem Grunde erfolgt die Beschichtung der Scheibe unabhängig vom Topf und ist der Herstellung des Topfes zeitlich vorgelagert.

Auch bei den Verfahren zur Herstellung der Bremsscheibe wird zur Einstellung des gewünschten Härtegrades des Reibbelages der eigentlichen Scheibe empfohlen, einzelne Lagen aus Titan-Aluminium-Stickstoff (TiAIN), d.h. Lagen mit einem größeren Titananteil als der Aluminiumanteil, auf Lagen von Aluminium-Titan-Stickstoff (AlTiN), d.h. Lagen mit einem mit einem größeren Aluminiumanteil als der Titananteil, folgen zu lassen. Vorzugsweise sind die einzelnen Lagen abwechselnd, mithin alternierend, aufeinander aufgebracht.

Auch hier sind die so gebildeten einzelnen Lagen vorzugsweise homogen, mithin gradientenfrei, hinsichtlich ihrer Titan-Konzentration aufgebaut. Zur Herstellung der einzelnen Lagen findet bevorzugt ebenfalls ein Lichtbogenverdampfungsverfahren (PVD-ARC-Verfahren) Einsatz. Dabei werden beispielsweise eine erste Titan-Aluminium-Kathode (TiAl) mit einem größeren Titananteil gegenüber dem Aluminiumanteil (bspw. zwischen 65% und 85% Titan und dazu komplementär zwischen 15% und 35% Aluminium) und eine zweite Titan-Aluminium-Kathode mit einem größeren Aluminiumanteil gegenüber dem Titananteil (bspw. zwischen 50% und 67% Aluminium und dazu komplementär zwischen 33% und 50% Titan) eingesetzt. Es besteht auch die Möglichkeit, eine erste Titan-Kathode und eine zweite Kathode mit einem großen Aluminiumanteil zu verwenden, wobei jeweils geeignete Verdampfungsströme angewendet werden, um lagenweise die gewünschte Konzentration zu erzielen.

Zur Beschleunigung des Beschichtungsprozesses hat es sich als vorteilhaft herausgestellt, wenn der Lichtbogen an beiden Kathoden (sowohl an der einen größeren Titananteil liefernden Kathode als auch an der einen größeren Aluminiumanteil liefernden Kathode) aufrechterhalten wird und die Titan- oder Aluminium-Konzentration mithilfe der eingesetzten Verdampfungsströme eingestellt wird. Dabei ist es von Vorteil, wenn die stärker zu verdampfende Kathode mit einem Verdampfungsstrom von zwischen 170 Ampère (A) und 190 A, vorzugsweise mit ungefähr 180 A betrieben wird. Dabei ist es ferner von Vorteil, wenn die schwächer zu verdampfende Kathode mit einem Verdampfungsstrom von zwischen 110 Ampère (A) und 130 A, vorzugsweise mit ungefähr 120 A betrieben wird.

Um einen robusten Schichtauftrag mit alternierenden TiAIN- und AlTiN-Schichten zu erzielen, hat es sich als vorteilhaft herausgestellt, wenn die Dauer für den Auftrag einer Lage zwischen 5 Minuten (Min.) und 10 Min., vorzugsweise ungefähr 8 Min. andauert.

Eine weitere Ausgestaltung eines der Verfahren zur Herstellung der Bremsscheibe umfasst vorzugsweise den weiteren Schritt des Aufbringens eines Hochtemperaturfettes auf die Verbindungselemente, bevor die Verbindungselemente in die Aufnahmen eingesetzt werden. Alternativ oder ergänzend kann das Hochtemperaturfett auch in die Aufnahmen eingebracht werden. Dieses Hochtemperaturfett sorgt dafür, dass die Verbindungselemente in der eigentlichen Scheibe "gleiten" oder sich zumindest begrenzt bewegen können. Eine ungenügende Beweglichkeit der Verbindungselemente im Reibring, d.h. in der eigentlichen Scheibe, könnte nämlich ungewünschte Geräusche hervorrufen. Eine ungenügende Bewegbarkeit könnte außerdem aufgrund der wirkenden Temperaturen beim und nach dem Bremsvorgang zu ungewünschten Verformungen an oder in dem Reibring oder an oder in dem Topf führen.

Dass auch hier die Reihenfolge der Schritte des Herstellverfahrens erfindungswesentlich ist, liegt an dem vorstehend bereits erläuterten prozesssicheren Beschichten im PVD-Beschichtungsverfahren "in situ" bei Drücken im Bereich von zwischen 9,0 · 10⁻³ mbar bis 4,0 · 10⁻² mbar. Würden nämlich die Verbindungselemente mit dem Hochtemperaturfett eingesetzt bevor die Beschichtung erfolgt, so führte dies zu einem sogenannten "Ausgasen" des Fettes beim Anlegen eines Vakuums, was zu dessen Verschmutzung führt. Diese Verschmutzungen könnten sich an den Wänden der Vakuumkammer absetzen oder sie könnten mittels der eingesetzten Vakuumpumpen abgesaugt werden. In beiden Fällen wird wertvolle Zeit benötigt, bis sich der gewünschte Druck für eine PVD-Beschichtung eingestellt hat. Durch die erfindungswesentliche Reihenfolge der Schritte lässt sich also der Prozess zur Herstellung der gesamten Bremsscheibe sehr kurz halten, was in der Bremsscheibenfertigung einen inhärenten Vorteil darstellt. Zudem lässt sich durch die erfindungswesentliche Reihenfolge der Beschichtungsprozess selbst kurz halten und die Verunreinigung der Vakuumkammer verhindern.

Für den Ausgleich thermischer Expansionseffekte hat es sich als vorteilhaft erwiesen, wenn die Verbindungselemente mit zumindest axialem Spiel in den Aufnahmen eingesetzt sind.

Die Verbindungselemente sind vorzugsweise als Verbindungsstifte gebildet, die den Topf und die Scheibe bezüglich einer Drehachse der Bremsscheibe radial miteinander verbinden. Die radiale Anordnung bietet eine größere Festigkeit für die Bremsscheibe. Zudem ist diese Gestaltung abriebfester als eine Nietverbindung, die parallel zur Drehachse orientiert ist.

Vorzugsweise umfasst der Topf eine Graugusslegierung ausgewählt aus GG20, GG25, GG30, GG35 und GG40. Insbesondere die Graugusslegierung GG40 zeichnet sich aufgrund ihrer hohen Brinell-Härte besonders gut als Reibscheibe für eine Bremsscheibe aus.

Vorzugsweise ist der Stift als ein, insbesondere rostfreier, Edelstahlstift gebildet, welcher vor Korrosion aufgrund von Witterung geschützt ist. Es kommt dabei sogar der Einsatz eines säurebeständigen Edelstahlstifts in Betracht, welcher zusätzlich bei Salz auf den Straßen Schutz bietet.

Die nach dem vorangehenden Verfahren hergestellte erfindungsgemäße Bremsscheibe weist eine verbesserte Festigkeit ihres Topfes auf. Sie besitzt hinsichtlich ihres Werkstoffes insgesamt eine verbesserte Festigkeit. Alle in Verbindung mit dem vorangehenden Verfahren beschriebenen Vorteilte und vorteilhaften Ausgestaltungen gelten auch für diese erfindungsgemäße Bremsscheibe.

Die Erfindung wird im Einzelnen anhand der Zeichnung erläutert, dabei zeigen:
- Fig. 1: einen Ausschnitt aus einem beschichteten, metallischen Werkstück;
- Fig. 2: eine Bremsscheibe teilweise im Längsschnitt;
- Fig. 3: eine Schnittansicht durch eine Bremsscheibe; und
- Fig. 4: eine Schnittansicht durch eine weitere Bremsscheibe.

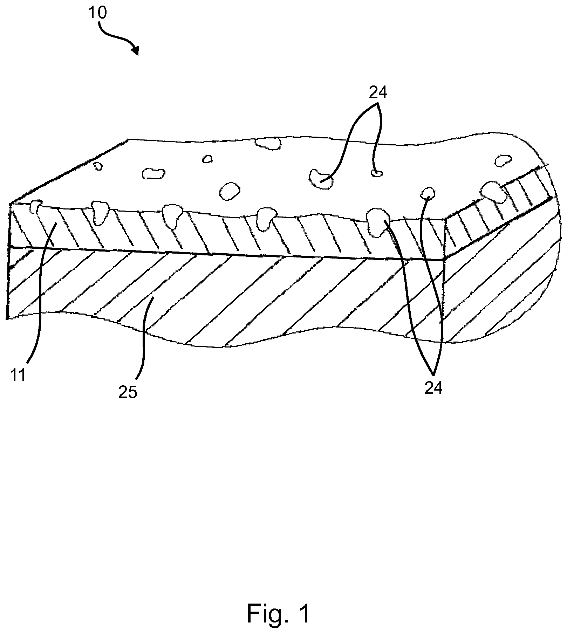

Fig. 1 zeigt einen vergrößerten Ausschnitt aus der Bremsfläche 20 eines als Bremsscheibe ausgebildeten Teils 10 einer Fahrzeugbremse, das in der vereinfachten Darstellung nach Fig. 1 Teil einer Kfz-Bremse ist, mit gasnitriertem, metallischem Trägermaterial 25. Eine Beschichtung 11 ist mit dem PVD-ARC-Verfahren aufgetragen worden. Das Beschichtungsmaterial trägt an seiner Oberfläche Mikrospritzer 24, die, auf eine Bremsscheibe 10 übertragen, das Einbremsen erleichtern. Beim Einbremsen wird die Oberseite des Teils 10 mit den Mikrospritzern 24 mit dem nicht gezeigten Bremsbelag in Kontakt gebracht und raut diesen wie eine Egge auf. Der Bremsbelag wird dadurch aktiviert. Die Schichtdicke beträgt zwischen 4 und 30 µm, vorzugsweise 7 µm. Sie kann vorzugsweise aber zwischen 4 und 30

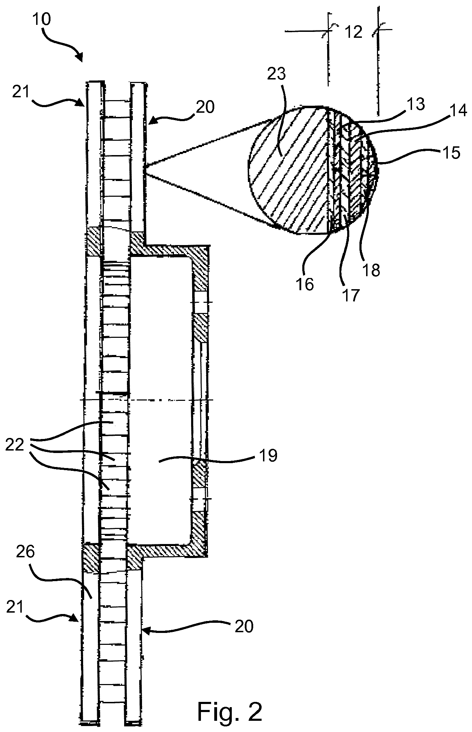

In Fig. 2 ist eine Bremsscheibe 10 als Teil einer üblichen Kfz-Bremse gezeigt. Die Bremsscheibe 10 besteht aus einem Topf 19 und der eigentlichen Scheibe 26 mit den Bremsflächen 20, 21. Die Bremsscheibe 10 ist durch Lüftungsschlitze 22 innenbelüftet und ist damit für ein schnelles oder schweres Kfz, wie z.B. Sportwagen, Busse, LKW und für Schienenfahrzeuge oder Luftfahrzeuge und für Energieanlagen bestimmt. Durch ihre allseitige Beschichtung ist sie weitestgehend korrosionsgeschützt und passt sich so dem Gesamtbild einer Nobelkarosse an, da eine korrodierte Bremsscheibe nicht zu einem teuren Auto passt.

In Fig. 2 ist auch ein herausgezogener, vergrößerter Partialschnitt der Bremsfläche 20 gezeigt. Eine plasmanitrierte Schicht 23 von wenigen 1/10tel Millimeter Dicke ist abgedeckt mit sechs Lagen 13, 14, 15, 16, 17, 18, die mit dem PVD-ARC Verfahren aufgebracht wurden. Von den sechs Lagen sind drei als harte Schichten 16, 17, 18 und die anderen drei als nicht ganz so harte Lagen 13, 14, 15 ausgebildet. Die harten und die weniger harten Lagen sind im steten Wechsel aufgetragen. Der gesamte Schichtauftrag 12 misst zwischen 2 und 20 µm, vorliegend ca. 3 µm.

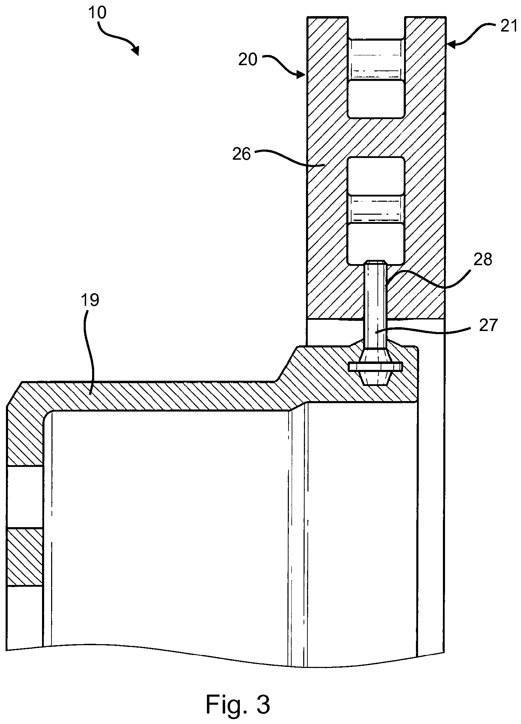

In Fig. 3 ist eine weitere Detailansicht eines Schnittes durch eine Bremsscheibe 10 gezeigt, welche einen Topf 19 aus einer Aluminiumlegierung und eine mit einer Beschichtung 11 versehene Scheibe 26 aus Grauguss umfasst. In den Topf 19 sind radial bezüglich der Drehachse der Bremsscheibe 10 ausgerichtete Verbindungselemente 27 in Form von Edelstahlstiften eingegossen oder gefügt. Die Scheibe 26 weist ihrerseits, insbesondere an einer dem Topf 19 zugewandten Innenwandung, ebenfalls radial bezüglich der Drehachse orientierte Aufnahmen 28 auf, wobei in jeweils einer der Aufnahmen 28 eines der Verbindungselemente 27 mit geringem Spiel geführt ist. Durch dieses geringe Spiel ist die Scheibe 26 schwimmend am Topf 19 gelagert. Auch hier sind einige der Lüftungsschlitze 22 vorhanden. Die Bremsscheibe 10 ist also vorzugsweise als eine innenbelüftete, Aluminium-Grauguss-Verbund-Bremsscheibe gebildet.

Nachfolgend wird das Verfahren zur Herstellung der Bremsscheibe 10 nach Fig. 3 näher erläutert.

Zunächst werden Flächen der Scheibe 26 plasmanitriert, wobei die Flächen der Scheibe 26 anschließend mit einer Beschichtung 11 mittels des PVD-ARC-Verfahrens zur Ausbildung der beiden Bremsflächen 10, 11 versehen werden.

Das PVD-ARC-Verfahren umfasst dabei zur Einstellung des gewünschten Härtegrades des Reibbelages der eigentlichen Scheibe 26 das Aufbringen einzelner Lagen 16, 17, 18 aus Titan-Aluminium-Stickstoff (TiAIN), d.h. von Schichten mit einem größeren Titananteil als der Aluminiumanteil, auf Lagen 13, 14, 15 von Aluminium-Titan-Stickstoff (AlTiN), d.h. Schichten mit einem größeren Aluminiumanteil als der Titananteil. Vorzugsweise sind die einzelnen Lagen 13, 14, 15, 16, 17, 18 abwechselnd, mithin alternierend, aufeinander aufgebracht.

Die Aufbringung der Lagen 16, 17, 18 mit größerem Anteil an Titan gegenüber Aluminium erfolgt bei einer Temperatur von zwischen 400 Grad Celsius und 500 Grad Celsius mit einem Vakuum bzw. einem Druck in einem Bereich von zwischen 9,0 . 10⁻³ mbar bis 4,0 · 10⁻² mbar und bei einem Verdampfungsstrom von zwischen 170 A und 190 A für eine Zeit von jeweils 8 Minuten. Die zweite Kathode mit einem größeren Aluminiumanteil wird aus Gründen der Prozesszeitersparnis gleichzeitig mit einem Verdampfungsstrom von ungefähr 120 A betrieben.

Dementsprechend erfolgt die Aufbringung der Lagen 13, 14, 15 mit größerem Anteil an Aluminium gegenüber Titan bei einer Temperatur von zwischen 400 Grad Celsius und 500 Grad Celsius mit einem Vakuum bzw. einem Druck in einem Bereich von zwischen 9,0 · 10⁻³ mbar bis 4,0 · 10⁻² mbar und bei einem Verdampfungsstrom von zwischen 170 A und 190 A für eine Zeit von jeweils 8 Minuten. Die erste Kathode mit einem größeren Titananteil wird aus Gründen der Prozesszeitersparnis gleichzeitig mit einem Verdampfungsstrom von ungefähr 120 A betrieben.

Zeitlich dem Beschichten nachfolgend werden die Verbindungselemente 27 mit einem Hochleistungsfett gefettet und in jeweils eine der in der Scheibe 26 ausgebildeten Aufnahmen 28 derart eingesetzt, dass die Verbindungselemente 27 aus den Aufnahmen 28 herausragen.

Zeitlich dem Einsetzen nachfolgend wird der Topf 19 dann derart urgeformt, dass die Verbindungselemente 27 in das Material des Topfes 19 eingebettet werden. Vorzugsweise wird der Topf 19 gegossen, wobei dann die Stifte in das Material des Topfes 19 ebenfalls eingegossen werden.

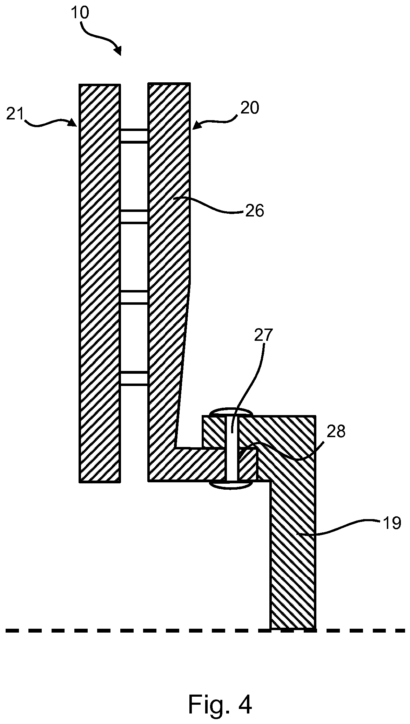

In Fig. 4 ist eine weitere Detailansicht eines Schnittes durch eine Bremsscheibe 10 gezeigt, welche einen Topf 19 aus einer Aluminiumlegierung und eine mit einer Beschichtung 11 versehene Scheibe 26 aus Grauguss umfasst. In den Topf 19 sind radial bezüglich der Drehachse der Bremsscheibe 10 ausgerichtete Verbindungselemente 27 in Form von Nieten eingebracht, die in die Aufnahmen 28 eines an der Scheibe 26 ausgebildeten Bundes eingesetzt sind. Auch der Topf 19 weist einen geeigneten Bund auf, in welchem mit den Aufnahmen 28 der Scheibe 26 fluchtende Durchführungen vorhanden sind. Auch diese Bremsscheibe 10 ist also vorzugsweise als eine innenbelüftete, Aluminium-Grauguss-Verbund-Bremsscheibe gebildet. Sie unterscheidet sich von der Bremsscheibe nach Fig. 3 also nur geringfügig.

Nachfolgend wird das Verfahren zur Herstellung der Bremsscheibe 10 nach Fig. 4 näher erläutert.

Zunächst werden Flächen der Scheibe 26 plasmanitriert, wobei die Flächen der Scheibe 26 anschließend mit einer Beschichtung 11 mittels des PVD-ARC-Verfahrens unter Ausbildung der Bremsflächen 10, 11 versehen werden.

Das PVD-ARC-Verfahren umfasst dabei zur Einstellung des gewünschten Härtegrades des Reibbelages der eigentlichen Scheibe 26 das Aufbringen einzelner Lagen 16, 17, 18 aus Titan-Aluminium-Stickstoff (TiAIN), d.h. von Schichten mit einem größeren Titananteil als der Aluminiumanteil, auf Lagen 13, 14, 15 von Aluminium-Titan-Stickstoff (AlTiN), d.h. Schichten mit einem größeren Aluminiumanteil als der Titananteil. Vorzugsweise sind die einzelnen Lagen 13, 14, 15, 16, 17, 18 abwechselnd, mithin alternierend, aufeinander aufgebracht.

Die Aufbringung der Lage 16, 17, 18 mit größerem Anteil an Titan gegenüber Aluminium erfolgt bei einer Temperatur von zwischen 400 Grad Celsius und 500 Grad Celsius unter Vakuum bzw. einem Druck in einem Bereich von zwischen 9,0 . 10⁻³ mbar bis 4,0 · 10⁻² mbar und bei einem Verdampfungsstrom von zwischen 170 A und 190 A für eine Zeit von jeweils 8 Minuten. Die zweite Kathode mit einem größeren Aluminiumanteil wird aus Gründen der Prozesszeitersparnis gleichzeitig mit einem Verdampfungsstrom von ungefähr 120 A betrieben.

Dementsprechend erfolgt die Aufbringung der Lage 13, 14, 15 mit größerem Anteil an Aluminium gegenüber Titan bei einer Temperatur von zwischen 400 Grad Celsius und 500 Grad Celsius unter Vakuum bzw. einem Druck in einem Bereich von zwischen 9,0 · 10⁻³ mbar bis 4,0 · 10⁻² mbar und bei einem Verdampfungsstrom von zwischen 170 A und 190 A für eine Zeit von jeweils 8 Minuten. Die erste Kathode mit einem größeren Titananteil wird aus Gründen der Prozesszeitersparnis gleichzeitig bei einem Verdampfungsstrom von ungefähr 120 A betrieben.

Gleichzeitig, zuvor oder danach wird der Topf 19 bereitgestellt oder gegossen. Dem Beschichten der Scheibe 26 zeitlich nachfolgend, wird dann der Topf 19 mit der Scheibe 26 mittels Verbindungselementen 27 in Form von Nieten verbunden oder gefügt.

Der Schutzbereich der Erfindung wird durch die beigefügten Ansprüche festgelegt.

### BEZUGSZEICHENLISTE

- 10: Bremsscheibe
- 11: Beschichtung
- 12: Schichtauftrag
- 13: Lage (geringerer Härte / AlTiN)
- 14: Lage (geringerer Härte / AlTiN)
- 15: Lage (geringerer Härte / AlTiN)
- 16: Lage (großer Härte / TiAIN)
- 17: Lage (großer Härte / TiAIN)
- 18: Lage (großer Härte / TiAIN)
- 19: Topf
- 20: Bremsfläche
- 21: Bremsfläche
- 22: Lüftungsschlitze
- 23: Schicht (plasmanitriert)
- 24: Mikrospritzer
- 25: Trägermaterial
- 26: Scheibe (Reibscheibe)
- 27: Verbindungselement
- 28: Aufnahme

## Patentansprüche

1. Verfahren zur Herstellung einer Bremsscheibe (10) mit einem Topf (19), der Aluminium oder eine Aluminiumlegierung umfasst, mit einer Bremsflächen (10, 11) aufweisenden Scheibe (26), die Grauguss umfasst, sowie mit Verbindungselementen (27) zur Verbindung des Topfes (19) und der Scheibe (26), **gekennzeichnet durch** die folgenden Schritte:
- Beschichten von Flächen der Scheibe (26) mit einer Beschichtung (11) mittels eines PVD-Verfahrens wodurch die Bremsflächen (10, 11) ausgebildet werden; und
- zeitlich dem Beschichten nachfolgend,
entweder: Einsetzen von jeweils einem der Verbindungselemente (27) in jeweils eine von in der Scheibe (26) ausgebildeten Aufnahmen (28), derart, dass die Verbindungselemente (27) aus den Aufnahmen (28) herausragen; und zeitlich dem Einsetzen nachfolgend, Urformen des Topfes (19), derart, dass die Verbindungselemente (27) in das Material des Topfes (19) eingebettet werden,
oder: Vernieten des Topfes (19) mit der beschichteten Scheibe (16) mittels Nieten.

2. Verfahren nach Anspruch 1, **dadurch gekennzeichnet, dass** auf die Verbindungselemente (27) und/oder in die Aufnahmen (28) ein Hochtemperaturfett gebracht wird, bevor die Verbindungselemente (27) in die Aufnahmen (28) eingesetzt werden.

3. Verfahren nach Anspruch 2, **dadurch gekennzeichnet, dass** die Verbindungselemente (27) mit zumindest axialem Spiel in die Aufnahmen (28) eingesetzt sind.

4. Verfahren nach einem der Ansprüche 1 bis 3, **dadurch gekennzeichnet, dass** die Verbindungselemente (27) als Verbindungsstifte gebildet sind, die den Topf (19) und die Scheibe (26) bezüglich einer Drehachse der Bremsscheibe (15) radial verbinden.

5. Bremsscheibe (10) hergestellt mit einem Verfahren nach einem der Ansprüche 1 bis 4.

## Claims

1. A method of manufacturing a brake disc (10) having a cup (19) comprising aluminium or an aluminium alloy, a disc (26) having a braking surfaces (10, 11) comprising grey cast iron, and connecting elements (27) for connecting the cup (19) and the disc (26), **characterized by** following steps:
- Coating surfaces of the disc (26) with a coating (11) by a PVD process thereby forming the braking surface (10,11); and
- Subsequent in time to the coating, either: inserting a respective one of the connecting elements (27) into a respective one of receptacles (28) formed in the disc (26), such that the connecting elements (27) protrude from the receptacles (28); and subsequent in time to the insertion, forming the cup (19) such that the connecting elements (27) are embedded in the material of the cup (19),
or: riveting the pot (19) to the coated disc (16) by means of rivets.

2. The method according to claim 1, **characterized in that** a high-temperature grease is applied to the connecting elements (27) and/or in the receptacles (28) before the connecting elements (27) are inserted in the receptacles (28).

3. The method according to claim 2, **characterized in that** the connecting elements (27) are inserted into the receptacles (28) with at least axial play.

4. The method according to one of the claims 1 to 3, **characterized in that** the connecting elements (27) are formed as connecting pins which radially connect the cup (19) and the disc (26) with respect to an axis of rotation of the brake disc (15).

5. A Brake disc (10) manufactured by a method according to any one of claims 1 to 4.

## Revendications

1. Procédé de fabrication d'un disque de frein (10) avec un récipient (19), comprenant de l'aluminium ou un alliage d'aluminium, avec un disque (26) présentant des surfaces de freinage (10, 11), qui comprend de la fonte grise, et avec des éléments de liaison (27) pour relier le récipient (19) et le disque (26), **caractérisé par** les étapes suivantes consistant à :
- appliquer en revêtement un revêtement (11) sur les surfaces du disque (26) en utilisant un procédé PVD, en formant ainsi les surfaces de freinage (10, 11) ; et
- après l'application en revêtement,
soit : insérer l'un des éléments de liaison (27) dans l'un de logements (28) formés dans le disque (26) de manière à ce que les éléments de liaison (27) fassent saillie à partir des logements (28) ; et après l'insertion, mettre en forme le récipient (19) de manière à ce que les éléments de liaison (27) soient noyés dans le matériau du récipient (19),
ou soit : riveter le pot (19) sur le disque revêtu (16) au moyen de rivets.

2. Procédé selon la revendication 1, **caractérisé en ce qu'**une graisse haute température est appliquée sur les éléments de liaison (27) et/ou dans les logements (28) avant l'insertion des éléments de liaison (27) dans les logements (28).

3. Procédé selon la revendication 2, **caractérisé en ce que** les éléments de liaison (27) sont insérés dans les logements (28) avec au moins un jeu axial.

4. Procédé selon l'une quelconque des revendications 1 à 3, **caractérisé en ce que** les éléments de liaison (27) sont réalisés sous forme d'axes de liaison qui relient radialement le récipient (19) et le disque (26) par référence à un axe de rotation du disque de frein (15).

5. Disque de frein (10) réalisé à l'aide d'un procédé selon l'une quelconque des revendications 1 à 4.
